# EUROPÄISCHE PATENTSCHRIFT

(11) **EP 1 935 246 B1**
(45) Veröffentlichungstag und Bekanntmachung des Hinweises auf die Patenterteilung: **23.03.2011**
(21) Anmeldenummer: 07150084.7
(22) Anmeldetag: 18.12.2007
(51) Int. Cl.: A21C 3/08, A21C 9/08

(54) **System zum Vermessen und Ausrichten von Teigsträngen in ihrer Länge und Lage**
System for measuring and alignment of dough strands by length and position
Système destiné à la mesure et l'alignement de tronçons de pâte suivant leur longueur et leur position

(30) Priorität: 21.12.2006 DE 102006061970
(43) Veröffentlichungstag der Anmeldung: 25.06.2008
(73) Patentinhaber: Fritsch GmbH, 97348 Markt Einersheim (DE)
(72) Erfinder: Bernhardt, Udo, 97346 Iphofen (DE)
(74) Vertreter: Götz, Georg Alois

(56) Entgegenhaltungen:
- EP-A- 0 938 844
- WO-A-2007/104801
- DE-A1- 4 308 357
- DE-A1- 19 510 931
- DE-A1- 19 543 250
- DE-A1- 19 613 767
- DE-A1- 19 816 738
- DE-C1- 3 841 395
- DE-U1- 20 007 872
- US-A1- 2005 061 162

## Beschreibung

Die Erfindung betrifft ein Verfahren zum Vermessen und/oder Ausrichten von Teigsträngen in ihrer Länge und/oder Lage, das zum Einsatz in Brezelschlingmaschinen oder sonstigen Teigverarbeitungsmaschinen, einschließlich solcher zur Herstellung ring- oder U-förmiger Gebäckstücke, z.B. Laugenringe, geeignet ist. Dieses Verfahren geht von folgenden Verarbeitungsschritten aus:
über eine Teigstrang-Fördereinrichtung wird ein Teigstrang in Wirkungsverbindung mit einer Abtasteinrichtung gebracht,
die Ausgangssignale der Abtasteinrichtung werden von einer Steuerung, ggf. mit integrierter Regelung, aufgenommen und verarbeitet,
es wird über die Abtasteinrichtung ein Quantum an Energiefluss oder -strom vorbestimmt, dem der Teigstrang unterworfen wird.

Ferner betrifft die Erfindung eine Teigstrang-Messanordnung, insbesondere unter Einsatz des vorgenannten Verfahrens, wobei ein Teigstrang oder wenigstens dessen einer oder mehrere Endabschnitte einer oder mehreren Energiequellen gegenüberliegen, jeder Energiequelle ein Sensor zugeordnet ist, und die Sensorausgänge von einem Steuerungsrechner verarbeitet werden. Weiter betrifft die Erfindung eine Vorrichtung zum Ausrichten und/oder Vermessen von Teigsträngen, geeignet zur Durchführung des genannten Verfahrens und zur Verwendung in Teigstrang-Schlingmaschinen, insbesondere Brezelschlingmaschinen. Diese Vorrichtung basiert auf einem Förderband, auf dessen Oberfläche mit quer aufstehender Drehachse ein von einer Antriebseinheit drehbares Richtrad so angeordnet und abhebbar ist, dass geförderte Teigstränge daran unter Erhalt oder Beibehaltung einer (ggf. vorgeformten) U-Form in Anlage kommen. Mit Abheben des Richtrades werden die anliegenden Teigstränge zur Weiterbeförderung freigegeben. Ferner basiert die Vorrichtung auf einer Abtasteinrichtung zur separaten Erkennung je eines beider, in Förderrichtung abstehender Teigstrang-Endabschnitte und auf eine Steuerung, welche die Antriebseinheit des Richtrades kontrollieren kann und eingangsseitig mit der Abtasteinrichtung verbunden ist.

Eine gattungsgemäße Vorrichtung etwa dieser Art ist aus EP 0 938 844 A1, dortige Absätze - in Verbindung mit dortigen Figuren 2 und 2a bekannt. Diese dient als Biege- und Längenmesseinrichtung sowie der Zuführung von in symmetrische U-Form ausgerichtete Teigstränge zu einem Brezel-Schlingroboter, der die quer zur Förderrichtung fluchtenden Teigstrang-Enden mit Greifern leicht erfassen kann. Zur symmetrischen Ausrichtung der U-Form wird der Teigstrang mit seinen beiden Enden zwischen zwei Lichtschranken hin- und herverstellt, die jeweils ein Teigstrang-Ende sensieren. Nach dem zweiten Durchsetzen der zweiten Lichtschranke wird der Teigstrang um die Hälfte des Drehweges zwischen dem Durchsetzen der ersten und der zweiten Lichtschranke zurückverstellt, wobei die beiden Teigstrang-Enden quer zur Förderrichtung fluchten bzw. symmetrisch ausgerichtet sind. Der Drehwinkelweg, den das Richtrad zum Verfahren des Teigstrangs von der ersten zur zweiten Lichtschranke benötigt, wird mit einem Winkelgeber gezählt und zur Ansteuerung und Kontrolle des Antriebs für das Richtrad mitverwendet. Die Gesamtlänge des Teigstrangs wird bei der bekannten Vorrichtung dadurch ermittelt, dass eine Recheneinheit den Durchmesser des Richtrades sowie dessen Abstand zu den Lichtschranken verrechnet. Über den zurückgelegten Drehweg lässt sich die Gesamtlänge anhand der genannten geometrischen Parameter ausrechnen und für etwaige weitere Einstellzwecke innerhalb der gesamten Teigverarbeitungslinie verwenden.

Aus der Firmenschrift "Lichtgitter BLG 1 Erfassen, zählen, messen" der Firma Balluff GmbH, Schurwaldstraße 9, 73765 Neuhausen a.d.F. sind Lichtgitter-Systeme als optoelektronische Sensoren bekannt. Das System ist in verschiedenen Messfeldhöhen von 100, 150 und 300 mm verfügbar. Verschiedene Baureihen beinhalten sowohl große als auch kleine Reichweiten. Eine sichere Erfassung breiter und sehr großer Objekte ist grundsätzlich möglich. Die Auflösung kann zwischen 4, 5 und 7 mm variieren. Die Typen mit einer Messfeldhöhe von 100 und 150 mm sind wahlweise mit niedriger oder hoher Auflösung verfügbar. Mittels eines analogen Spannungsausgangs lässt sich direkt die Höhe bzw. Breite eines Objekts ausgeben. Ein zusätzlicher, binärer Schaltausgang zeigt an, ob sich ein Objekt im von den Lichtstrahlen kontrollierten Bereich befindet. Als Applikationen werden angegeben: Teile zählen; Höhenmessung und Höhenkontrolle; Anwesenheitskontrolle; Durchhang- und Positionskontrolle; Palettenkontrolle; Bahnkontrolle; Positions- und Materialkontrolle.

DE-U-200 07 872 beschreibt eine Vorrichtung zum Formen strangförmiger Teiglinge zur Brezelform. Darin erfolgt ein Ausrichten des Teiglings, mit dem erreicht wird, dass dessen Schenkelenden in Transportrichtung auf gleicher Höhe zum Liegen kommen. Von einem Förderband wird der Teigling zu einer Ausrichteinheit transportiert, wo er mit seinem mittleren Teil auf einen Rotationskörper aufläuft und gehalten wird. Weiter stromabwärts sind Sensoren angeordnet, die den beiden Schenkelenden des Teiglings zugeordnet sind. Der Rotationskörper der Ausrichteinheit wird solange gedreht, bis beide Sensoren die Schenkelenden des Teiglings erfasst haben.

DE 198 16 738 A1 beschreibt eine Übergabevorrichtung für vorgeformte, langgestreckte Teig-Rohlinge. Diese besitzt eine mehrteilige, kippbare Aufnahmeanordnung mit einer Längenmesseinrichtung für den jeweiligen Teig-Rohling. Die Längenmesseinrichtung ist an einem Trog angebracht; der um seine Längsachse in beide Richtungen um je 180° schwenkbar ist. Zur Längenmessung sind in den Längswänden des Trogs Längsschlitze eingearbeitet. Auf der einen Seite sind in diesen Längsschlitzen Lichtquellen angeordnet, und auf der gegenüberliegenden Seite sind im entsprechenden Längsschlitz Detektoren angebracht. Durch die erzeugten, optischen Signale lässt sich die Lage der Enden des in den Trog eingegebenen Teig-Rohlings feststellen.

Bei einem bekannten Kantensensor (DE-A-196 20 642) wird die von einem Detektor gemessene Lichtintensität zur Lagebestimmung einer Kante K genutzt. Dazu wird von einer Lichtquelle ein Messstrahl auf ein die Kante aufweisendes Objekt gesendet, das den Messdetektor abschattet. Daraus ergibt sich für den Lichtdetektor eine geringere Lichtintensität. Eine Auswerteelektronik gibt eine entsprechende geringere Ausgangsspannung als im nichtabgeschatteten Zustand oder in einem weniger abgeschatteten Zustand aus. Die Höhe der Ausgangsspannung ist damit proportional zur Lage der Objektkante im Messstrahl. Diese Messanordnung ist in der genannten Fundstelle hauptsächlich als eine Weiterbildung dahingehend beschrieben, dass für den Ausgleich der Wirkungen von Schwankungen der Versorgungsspannung, des Umgebungslichts der Lichtschranke oder von im Betrieb auftretenden Schwankungen der Helligkeit der Lichtquelle infolge von Nachdunklung oder Verschmutzung der Lichtquellenoberfläche keine Quotientenbildung 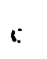 Signale zweier lichtempfindlicher Detektoren mehr benötigt wird.

Der Erfindung liegt die Aufgabe zugrunde, bei einem Teigstrang-Vermessungs- und Ausrichtsystem den strukturellen Aufbau und die Funktionsweise zu vereinfachen sowie gleichzeitig die Mess- und Ausrichtgeschwindigkeit zu erhöhen. Zur Lösung wird auf das im Anspruch 1 angegebene Vermessungs- und Ausrichtverfahren, und auf die im Anspruch 12 angegebene Ausricht- und Vermessungsvorrichtung verwiesen. Optionale, vorteilhafte Ausgestaltungen ergeben sich aus den abhängigen Ansprüchen.

Die Erfindung umfasst ein System zum Vermessen und Ausrichten von Teigsträngen mit Hilfe einer vorzugsweise berührungslos arbeitenden Abtasteinrichtung, welche den Teigstrang oder wenigstens dessen Endabschnitte mit einem vorspezifizierten Energie-Quantum beaufschlagt. Je nach dem, wie viel von der auf den Teigstrang oder seine Endabschnitte abgestrahlten oder abgesandten Energie absorbiert wird und/oder zu Energiesenken bzw. -sensoren oder -empfängern gelangt, ist der betroffene Teigstrang länger oder kürzer bzw. ist sein einer Endabschnitt gegenüber dem anderen asymmetrisch versetzt. Um die Lage der Teigstrang-Endabschnitte bezüglich einer Teigstrang-Mitte miteinander vergleichen zu können, ist es zweckmäßig, zwei voneinander separate Gruppen oder Einrichtungen mit Energiequellen zur jeweiligen, gezielten Energieemission auf den Teigstrang einzusetzen. Die nach dem Teigstrang oder den Teigstrangenden empfangenen/gemessenen Energiemenge lässt sich in einer Steuerung mit dem ausgesandte Energie-Quantum vergleichen bzw. in Bezug oder ein Verhältnis setzen. Dieses Verhältnis und/oder die empfangenen/gemessenen Energiemenge stellt ein Maß für die Ausdehnungen vor allem in Teigstrang-Längsrichtung, aber auch für dessen Dicke dar. Die Energiesenken, -empfänger oder -sensoren können entweder nach dem Emittieren am Teigstrang vorbeigelangte Energie oder vom Teigstrang reflektierte Energie erfassen. Indem man das emittierte Energie-Quantum kennt und mit der sensierten Energiemenge vergleicht, kann man auch auf die vom Teigstrang auf dessen Oberfläche absorbierte Energiemenge schließen und diese Größe für die Analyse und Bestimmung beziehungsweise qualitative Beschaffenheit des Teigstrangs und insbesondere seiner geometrischen Abmessungen auswerten.

Gegenüber dem Stand der Technik lässt sich mit der Erfindung der Vorteil erzielen, dass der Messzyklus sich zeitlich erheblich verkürzen bzw. beschleunigen lässt: Es entfällt die Notwendigkeit, den Teigstrang mit seinen Enden zu einer ersten Lichtschranke und dann zu einer zweiten Lichtschranke und dann ggf. in eine symmetrische Mittelstellung zu verfahren, was mehrere Schritte erfordert und naturgemäß zeitaufwendig ist. Zusätzlich entfällt bei der Erfindung die Notwendigkeit, mit einem Winkel- oder sonstigem Lage-Geber den Teigstrang-Verstellweg zwischen den Lichtschranken erfassen zu müssen. Mit der Erfindung lässt sich also der "doppelte" Vorteil einer Struktur- und Funktionsvereinfachung aufgrund Wegfalls eines Drehwinkelsensors und eines damit einhergehenden Lageregelkreises und - gleichzeitig - einer Erhöhung der Messgeschwindigkeit aufgrund Vermeidung von reversierenden Ausmess-Verstellwegen erzielen.

Zur Einsparung von Energieemission und einer entsprechenden Anzahl von Energiequellen ist es vorteilhaft, den auszumessenden Teigstrang mit einem mittleren Abschnitt über eine Fördereinrichtung an einem Anschlag zur Anlage zu bringen, so dass nur die Endabschnitte des Teigstrangs mit Energie frei beaufschlagbar sind.

Zweckmäßig sind jedem Teigstrang-Endabschnitt ein Verband an Energiequellen vorzugsweise jeweils in gleicher Anzahl zugeordnet. Allerdings muss im Rahmen der Erfindung die Anzahl von Energiequellen pro Teigstrang-Endabschnitt nicht unbedingt gleich sein; vielmehr kann die Anzahl der Energiequellen von der Variationsbreite der Längenausdehnung des zu messenden Teigstranges abhängig gemacht werden. Die Längenausdehnung variiert mit dem jeweiligen Teig- oder Gebäcktyp.

Die Erfindung ist nicht auf den Einsatz mehrerer nebeneinander wirkender Energiequellen oder Energiesensoren/Energieempfänger beschränkt. Es ist auch denkbar, eine einzige Lichtquelle, beispielsweise in länglicher Stabform, auf den Teigstrang zu richten. Dieser einzelnen, vorzugsweise länglichstabförmigen Lichtquelle, können ein oder mehrere Sensoren zugeordnet sein.

Um den Teigstrang nicht nur vermessen, sondern auch mit seinen Enden zu einer symmetrischen U-Form ausrichten zu können, wird nach der Erfindung der Teigstrang über die Fördereinrichtung mit einem motorisch verstellbaren Anschlagmittel in Form eines radarligen Richtorgans in Anschlag, Anlage oder Eingriff gebracht. Das Richtorgan wird von einer Steuerung kontrolliert, welche dessen Verstellmotor entsprechend der Messung vorbeigeflossener, reflektierter oder absorbierter Energiemenge vorzugsweise in Bezug zum emittierten Energie-Quantum im Sinne einer symmetrischen Ausrichtung ansteuert.

Wie bereits angesprochen, lässt sich mit dem Einsatz von Anschlagmitteln in Form eines rundlichen Anschlags oder eines motorisch drehbaren Richtrades zu emittierendes Energie-Quantum beispielsweise aus einzelnen bzw. diskreten Energie-, insbesondere Lichtquellen, einsparen. Gleichwohl lässt sich die Teigstrang-Länge berechnen, indem die geometrischen Abmessungen der Anschlagmittel rechnerisch mit der empfangenen Energiemenge oder dem genannten Verhältnis emittiertes Energie-Quantum/empfangene Energiemenge verrechnet werden.

Die berechnete Teigstrang-Länge kann zum Einwirken auf vor- oder nachgeordnete Stellglieder einer Teigverarbeitungslinie verwendet werden. Ist beispielsweise der Teigstrang bedingt durch Variationen in der Teigbeschaffenheit von einem vorhergehenden Langrollsystem zu kurz ausgerollt worden, dann lässt sich dies mit dem erfindungsgemäßen Vermessungssystem feststellen und eine nachträgliche Verstellung des Langrollsystems durchführen. Weiter lässt sich eine zu kurze Teigstrang-Länge, wenn mit dem erfindungsgemäßen Teigstrang-Messsystem festgestellt, in einem nachgeordneten Schlingautomaten dadurch korrigieren, dass dieser den Teigstrang gemäß einer entsprechend erhaltenen Längeninformation noch länger dehnt.

Zur Realisierung des Energieflusses oder -stroms ist im Rahmen der Erfindung der Einsatz von Schallenergie, elektrostatischer Energie und/oder elektromagnetischer Wellenenergie insbesondere in Form von Lichtwellen denkbar. Der Einsatz von Licht lässt sich mittels an sich bekannter Lichtschranken realisieren, wobei Reihen, Gruppen, Verbände oder Verbunde bzw. Verbundgehäuse gebildet sind, die jeweils einzelne diskrete Lichtquellen oder -senken/Lichtsender oder -lichtempfänger umfassen. Analog können diese Gruppierungen mit Energiequellen oder -senken anderer Technologien verwirklicht werden. Bei der Verwendung diskreter, einzelner Energiequellen oder -empfänger/senken ist, um eine möglichst genaue Längenmessung zu erreichen, eine hohe Auflösung anzustreben. Dies wird mit einer möglichst hohen Anzahl einzelner, diskreter Energiequellen oder -senken in einer Gruppe erreicht. Diesem Ziel dient eine besondere Ausgestaltung der Erfindung, wonach die Lichtschranken mit sehr feinen Lichtleitern in Glasfasertechnologie realisiert sind. Diese können mit äußerst geringem Abstand voneinander angeordnet sein, so dass bei der Teigstrang-Abtastung mit Lichtstrahlen hoher Anzahl eine entsprechend erhöhte Auflösung erzielbar ist.

Eine erfindungsgemäße Teigstrang-Vermessungsanordnung ist gegeben, wenn ein Teigstrang einer oder mehreren Energiequellen und zugeordneten Energiesensoren gegenüberliegt, und die von der oder den Energiequellen aussendbare bzw. emittierbare Energiemenge quantifizierbar ist, und in einem Rechner einer Steuerung zur Berechnung der Teigstrang-Länge das emittierte Energie-Quantum in ein Verhältnis zur sensierten Energiemenge, die am Teigstrang vorbeigelangt oder von diesem reflektiert ist. Gegebenenfalls kann auch noch die vom Teigstrang auf seiner Oberfläche absorbierte Energiemenge mit in die Längenberechnung einbezogen werden.

Die erfindungsgemäße Messanordnung besteht darin, dass ein Anschlagkörper einem Teigstrang in dessen Förderweg beispielsweise auf einem Förderband in den Weg gestellt ist, so dass im Rahmen einer U-Form die Teigstrang-Enden in Förderrichtung vom Anschlagkörper abstehen. Beidseits des Förderwegs ist je wenigstens ein Verband, eine Reihe oder ein Verbund mit Energiequellen und/oder Energiesensoren auf den nächstliegenden, vom Anschlag abstehenden Endabschnitt des U-förmig am Anschlag hängenden Teigstrangs gerichtet. Dabei kann nicht nur, wenn man geometrische Abmessungen des Anschlagkörpers sowie dessen Abstand zur jeweiligen Energiequellen-/Sensorgruppe in die Berechnung mit einbezieht, die Teigstrang-Länge, sondern auch der Versatz der Teigstrang-Enden gegeneinander in Förderrichtung ermittelt werden. Dieser Versatz entspricht dem Unterschied zwischen den jeweiligen Verhältnissen "empfangene Energiemenge/emittiertes Energie-Quantum", die sich beim jeweiligen Teigstrang-Endabschnitt ergeben.

Damit ist die erfindungsgemäße Weiterbildung der Anordnung zu einer Vorrichtung eröffnet, die nicht nur den Teigstrang zu vermessen, sondern auch mit ihren U-förmigen Enden symmetrisch zueinander auszurichten vermag:

Als Anschlagkörper wird ein motorisch drehbares Richtrad eingesetzt, das wie an sich aus dem Stand der Technik (siehe oben) bekannt, von einem Förderband oder einer sonstigen Fördereinrichtung zur Freigabe des Teigstrangs für die Weiterbeförderung abhebbar ist. Der Antriebsmotor des Richtrades wird von einer Steuerung vorzugsweise mit einer digitalen Recheneinheit kontrolliert. Die Steuerung kann die Energiequellen zur Aussendung eines vorspezifizierten Energie-Quantums auf die jeweiligen Teigstrang-Enden betätigen und über geeignete Schnittstellen die entsprechenden Energiemengen von den einzelnen Energiesensoren empfangen. Über die Recheneinheit wird pro Teigstrang-Endabschnitt die empfangene Energiemenge numerische abgebildet, zweckmäßig in Bezug auf das emmittierte Energiequantum, und/oder das jeweilige Verhältnis empfangene Energiemenge/emittiertes Energie-Quantum gebildet, und die aus jedem Teigstrang-Endabschnitt abgeleiteten Werte für empfangene Energiemengen und/oder die genannten Verhältnisse werden miteinander verglichen. Sind die beiden Energiemengen-Werte und/oder Verhältnisse nicht gleich, dann wird der Richtrad-Antrieb von der Steuerung gemäß Vorgabe der darin enthaltenen Recheneinheit zum Rechts- oder Linkslauf so lange angesteuert, bis sich eine Gleichwertigkeit der beiden genannten Werte und/oder Verhältnisse feststellen lässt. Haben die von jedem Teigstrang-Endabschnitt ermittelten Werte für Energiemengen-Empfang und/oder Energie-Quantum/Energiemenge-Verhältnisse identische oder einander entsprechende Werte, lässt sich von einer symmetrischen Lage des Teigstrangs mit seinen Enden zueinander ausgehen. Sodann kann durch Abheben des Richtrads der symmetrisch auf der Fördereinrichtung liegende Teigstrang zur Weiterverarbeitung weitergegeben werden.

Bei der erfindungsgemäßen Anordnung lassen sich zur Realisierung der Energiequellen und -sensoren, neben Einweg- und Reflex-Lichtschranken auch Lichttaster oder sonstige optische Näherungsschalter einsetzen, bei denen in einer gemeinsamen Baueinheit Lichtsender/Quelle und Lichtempfänger/Sensor beherbergt sind. Der Lichtsensor reagiert auf das vom Teigstrang reflektierte Licht aus der Lichtquelle. Bei Verwendung eines Lichtgitters mit mehreren Lichtquellen bildet damit die empfangene Menge an Lichtenergie ein Maß für die Erstreckung des in einem von dem Lichtgitter kontrollierten Bereich eingetauchten Teigstrangs. Je kleiner oder größer die in den Lichtsensoren empfangene Lichtenergie ist, desto kleiner bzw. größer ist die Eintauchtiefe des Teigstrangs in den vom Lichtgitter kontrollierten Bereich.

Die technische Zuverlässigkeit der Detektion der Teigstränge, wenn sie in U-Form gebogen sind, lässt sich noch dadurch verbessern, dass die beiderseitigen, je auf einen Endabschnitt des U-förmigen Teigstrangs gerichteten Energiequellen und/oder -sensoren zueinander und/oder zur Teigstrang-Förderrichtung schräg ausgerichtet sind. Damit ist der Weg eröffnet, jedem der beiden Endabschnitte eines in U-Form vorliegenden Teigstranges einerseits eine Baueinheit bzw. ein Gehäuse mit jeweils mehreren Sender- und Empfängereinheiten darin und andererseits diesen gegenüberliegenden Reflektoren zuzuordnen. Indem sich so die Lichtstrahlen, die einem der Teigstrang-Enden zugeordnet sind, sich mit den Lichtstrahlen, die dem anderen Teigstrang-Ende zugeordnet sind, sich etwa in der Mitte der Fördereinrichtung schräg kreuzen können, kommt es zu keiner Aufhebung der Lichtwellen, und Störungen der Lichtdetektion sind vernachlässigbar oder vermieden.

Bei der erfindungsgemäßen Messanordnungs in die Energiequellen und/oder -sensoren der unterschiedlichen Teigstrang-Enden in ihren Höhenlagen zueinander versetzt angeordnet, damit diese parallel übereinander verlaufen können.

Weitere Einzelheiten, Merkmale, Merkmalskombinationen, Vorteile und Wirkungen auf der Basis der Erfindung ergeben sich aus der nachfolgenden Beschreibung bevorzugter, beispielhafter Ausführungsformen der Erfindung und aus den Zeichnungen. Diese zeigen jeweils schematisch in:
Fig. 1 eine Längenmessanordnung für einen Teigstrang mit zwei Lichtgittern jeweils aus einer Mehrzahl von Einweglichtschranken (Sender und Empfänger in getrennten Gehäusen);
Fig. 2 eine alternative Messanordnung mit zwei Lichtgittern jeweils mit einer Mehrzahl von Lichttastern (Sender und Empfänger in einer gemeinsamen Baueinheit);
Fig.3a eine Vermessungs- und Ausrichtungsvorrichtung für U-förmig gebogene Teigstränge mit pro Teigstrang-Ende einem Lichtgitter je aus einer Mehrzahl von Reflex-Lichtschranken;
Fig. 3b dieselbe Anordnung mit symmetrisch ausgerichtetem Teigstrang;
Fig. 4a eine der in Fig. 3a entsprechende Vorrichtung, wobei die Lichtgitter pro Teigstrang jeweils mit einer Mehrzahl von Lichttastern realisiert sind;
Fig.4b die Anordnung der Fig. 4a mit symmetrisch ausgerichtetem Teigstrang; und
Fig. 5 eine Stirnansicht auf eine Reflex-Lichtschranke gemäß Fig. 3a oder einen Lichttaster gemäß Fig. 4a.

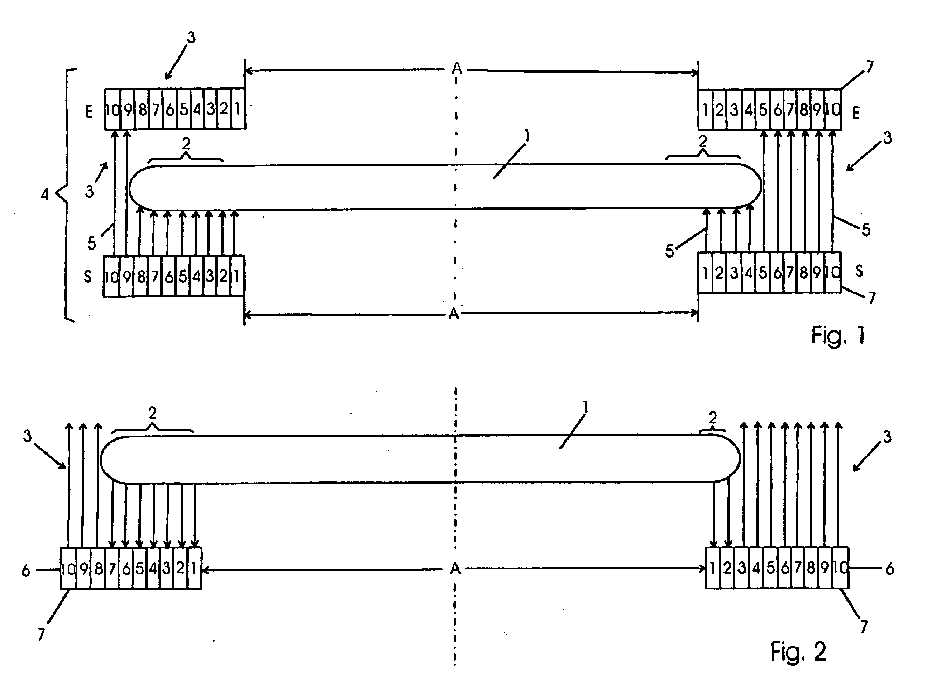

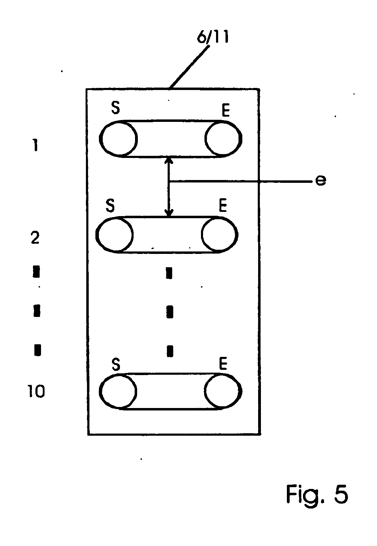

Gemäß Fig. 1 ist ein Teigstrang 1 mit seinen Endabschnitten 2 innerhalb zweier Lichtvorhänge bzw. Lichtgitter 3 angeordnet, welche in Teigstrang-Längsrichtung den Abstand A voneinander aufweisen. Die Lichtgitter 3 sind jeweils mit einer Mehrzahl Einweg-Lichtschranken 4 jeweils aus Sender S und gegenüberliegend angeordnetem Empfänger E gebildet, zwischen welchen jeweils ein unidirektionaler Lichtstrahl 5 verläuft. Im gezeichneten Beispiel ist jedes Lichtgitter 3 mit zehn Lichtschranken (in der Zeichnung durchnummeriert) gebildet. Ferner tauchen gemäß gezeichnetem Beispiel die Endabschnitte 2 des Teigstrangs 1 unterschiedlich tief in die jeweiligen Lichtgitter 3, wobei beim in Fig. 1 linken Lichtgitter 3 etwa acht Lichtschranken und dem rechten Lichtgitter 3 etwa vier Lichtschranken unterbrochen werden. Die zugehörigen acht bzw. vier Lichtempfänger E bleiben ohne Empfang von Lichtenergie, während die jeweils verbleibenden Lichtempfänger E (links der neunte und zehnte Lichtempfänger, rechts der fünfte-zehnte Lichtempfänger) mit Lichtenergie beaufschlagt werden. Ein (nicht gezeichneter) Steuerungsrechner erfasst die Ausgänge der Lichtempfänger und bildet daraus zunächst separat für den linken und den rechten Teigstrang-Endabschnitt die jeweilige Summe mit der in der betroffenen Lichtschranke 4 empfangenen Menge an Lichtenergie (links Summe aus acht, rechts Summe aus vier einzeln beziehungsweise diskret empfangenen Lichtmengen). Wird dann im weiteren Schritt im Steuerungsrechner die summierte Lichtenergie in Bezug oder ein Verhältnis zum insgesamt auf den jeweiligen Teigstrang-Endabschnitt 2 emittierten Licht-Quantum gesetzt, ergibt sich ein Maß für die Eintauchtiefe des jeweiligen Endabschnitts 2 in das Lichtgitter 3. Zweckmäßig weisen die Lichtschranken 4 bzw. ihre Lichtstrahlen 5 einheitliche, vorspezifizierte Abstände beziehungsweise Entfernungen e voneinander auf (vgl. auch Fig.5), so dass die Anzahl der unterbrochenen Lichtstrahlen 5 bzw. Lichtschranken 4 ein Maß für die Länge bzw. Eintauchtiefe ergibt, mit welcher der Teigstrang in das jeweilige Lichtgitter 3 einragt. Werden weiter im Steuerungsrechner die Eintauchtiefen der beiden Endabschnitte 2 sowie der Lichtgitter-Abstand A miteinander summiert, ergibt sich ein Wert, der der Gesamtlänge des Teigstrangs 1 entspricht.

Die Anordnung gemäß Fig. 2 unterscheidet sich von der nach Fig. 1 dadurch, dass die beiden Lichtgitter 3 jeweils mit einer Mehrzahl im Verband oder einem Gehäuseverbund angeordnete Lichttaster 6 realisiert ist. Diese sind im gezeichneten Beispiel einheitlich auf einer Längsseite des Teigstrangs 1 angeordnet, könnten aber auch auf unterschiedlichen Seiten platziert sein (entsprechendes gilt für die Lichtschranken 4 gemäß Fig.1). Wie an sich bekannt, ist für Lichttaster charakteristisch, dass in einem gemeinsamen Gehäuseverbund 7 sowohl der Lichtsender als auch der Lichtempfänger untergebracht sind. Im gezeichneten Beispiel der Fig. 2 umfassen der rechts- und linksseitige Gehäuseverbund 7 jeweils zehn Lichttaster 6. Bei dieser Erfindungsausbildung lässt sich die Teigstrang-Länge besonders einfach dadurch ermitteln, dass über den Steuerungsrechner die Ausgänge der Lichtempfänger ausgelesen werden, und die separat für jeden Teigstrang-Endabschnitt 2 aufsummierte, empfangene Lichtmenge als Maß für die jeweilige Eintauchtiefe der beiden Teigstrang-Endabschnitte 2 in die jeweils zugeordneten Lichtgitter 3 verwendet wird. Mit anderen Worten, die von den Teigstrang-Endabschnitten 2 reflektierten Lichtmengen entsprechen der vom jeweiligen Lichtgitter erfassten Teigstrang-Teillänge. Diese beiden Teillängen sind dann noch miteinander und mit dem Abstand A der beiden Lichttaster-Verbunde 7 zu addieren. Zweckmäßig, insbesondere zur Erhöhung der Zuverlässigkeit und Genauigkeit der Längenmessung, kann per Steuerungsrechner die von den Teigstrang-Endabschnitten 2 reflektierte und summierte Lichtmenge jedes Lichtgitters 3 in Beziehung gesetzt werden zum jeweils im Lichtgitter 3 ausgesandten Licht-Quantum.

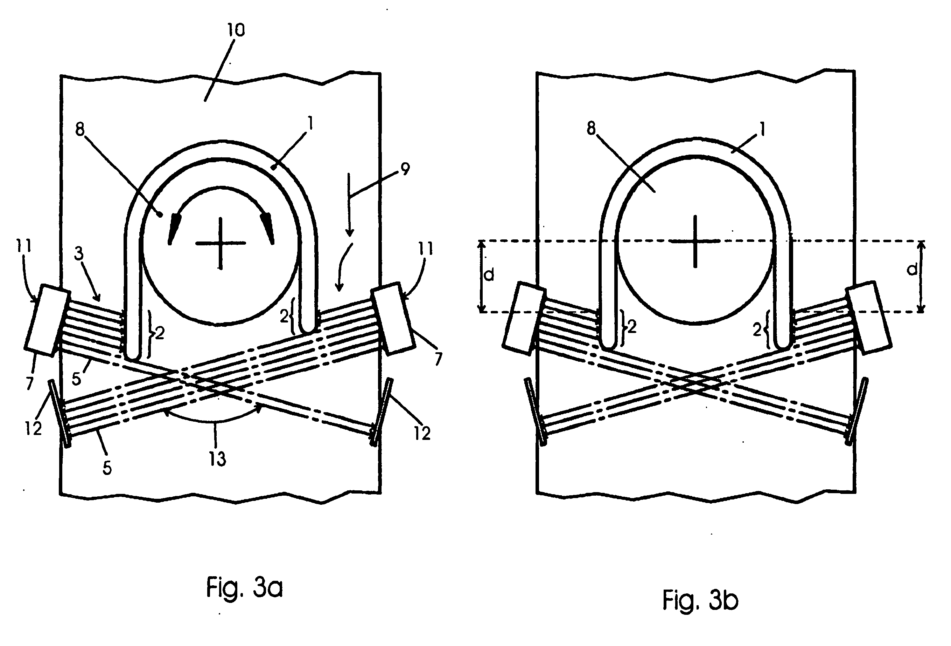

Die Ausricht- und Vermessungsvorrichtung gemäß Fig. 3a und 3b dient dazu, die Endabschnitte 2 des in Anlage an ein Richtrad 8 U-förmig gebogenen Teigstrangs 1 für die Greifer eines (nicht gezeichneten) nachgeordneten Schlingautomaten symmetrisch auszurichten, wie nach Fig. 3b erfolgt. Um zunächst den Versatz der Teigstrang-Endabschnitte 2 gemäß Fig. 3a in Förderrichtung 9 eines den Teigstrang 1 tragenden Förderbandes 10 gegeneinander festzustellen, werden von einer (nicht gezeichneten) Steuerung je einem Endabschnitt 2 zugeordnete Reflex-Lichtschranken 11 mit jeweils gegenüberliegend zugeordneten Reflexspiegeln 12 angesteuert oder auch ohne Steuerung aktiviert. Im letzeren Fall wäre es zweckmäßig, im Steuerungsrechner wenigstens das von jedem Lichtgitter 3 ausgesandte Lichtquantum als Rechenkonstante zu hinterlegen. Ähnlich wie bei den vorherigen Ausführungsbeispielen ist wiederum in jeweils einem gemeinsamen Verbundgehäuse 7 eine Mehrzahl diskreter Lichtsender und -empfänger im Verband zueinander angeordnet, so dass aus dem Verbundgehäuse eine bestimmte Anzahl Lichtstrahlen 5 austritt und ganz oder teilweise auf den jeweiligen Teigstrang-Endabschnitt 2 auftrifft oder vorbeigelangt. Die Verbundgehäuse 7 bzw. Reflex-Lichtschranken 11 pro Teigstrang-Endabschnitt 2 sind an den gegenüberliegenden Längsseiten des Förderbandes 10 angeordnet, ebenso wie die jeweils gegenüberliegend zugeordneten Spiegelreflektoren 12. Damit sich die Lichtstrahlen 5 der beidseitigen Reflex-Lichtschranken 11 nicht stören oder gar gegenseitig aufheben, und um deren Höhenversetzung gegeneinander zu vermeiden, sind diese zueinander und zur Förderrichtung 9 so ausgerichtet, dass ein Schrägwinkel 13 entsteht.

Die Anzahl der Lichtstrahlen, die am jeweiligen Endabschnitt 2 vorbeigelangt beziehungsweise nicht dort auftrifft, kann als Maß für die Eintauchtiefe des Teigstrang-Endabschnitts 2 in das jeweils zugeordnete Lichtgitter 3 verwendet beziehungsweise im (nicht gezeichneten) Steuerungsrechner verrechnet werden. Ist wie nach Fig. 3b die Eintauchtiefe in die beiderseitigen Lichtgitter 3 gleich, liegen die Teigstrang-Enden quer zur Förderrichtung 9 auf einer gemeinsamen Flucht, bzw. der Teigstrang 1 ist symmetrisch für die Weiterverarbeitung ausgerichtet. Dies wird sensorisch dadurch angezeigt, dass in jeder der beiderseitigen Reflex-Lichtschranken 11 dieselbe Lichtmenge empfangen wird, was einer etwa übereinstimmenden Absorption von Lichtstrahlen durch die Teigstrang-Endabschnitte 2 entspricht. Wird mittels der Steuerung gemäß Fig. 3a ein Ungleichgewicht zwischen dem beiderseitigen Empfang an Lichtmenge oder -energie festgestellt, kann über den Steuerungsrechner ein (nicht gezeichneter) Antrieb für das Richtrad 8 so angesteuert werden, dass dieses sich um einen entsprechenden Winkelweg verdreht und dabei den Teigstrang 1 in form- und/oder kraftschlüssigem Eingriff mitnimmt, bis die beiden Teigstrang-Enden 2 gemäß Fig. 3b auf einer Flucht quer zur Förderrichtung 9 liegen.

Der Einsatz eines gesonderten Winkelgebers (z.B. Inkrementalgeber oder Resolver) ist dabei nicht mehr notwendig. Das Richtrad bzw. dessen Drehantrieb braucht über die Steuerung nur so lange in eine Richtung gedreht zu werden, bis sich durch Abfrage der Ausgänge der Lichtempfänger/-sensoren der beiderseitigen Lichtschranken 11 ergibt, dass auf jeder Seite dieselbe Lichtmenge eintrifft bzw. dieselbe Anzahl an Lichtstrahlen unterbrochen ist. Sodann kann die Stromversorgung für den Drehantrieb unterbrochen werden.

Die Vorrichtung gemäß Fig. 3a und 3b lässt sich auch zur Ermittlung der Teigstrang-Länge einsetzen. Dazu sind in dem Steuerungsrechner als Rechenkonstante der Durchmesser oder Radius des Richtrades 8 sowie die Distanz d hinterlegt, welche eine durch den Richtrad-Mittelpunkt und im rechten Winkel zur Förderrichtung 9 verlaufende Gerade zur Reflex-Lichtschranke 11 bzw. deren Gehäuseverbund 7 und/oder zu einem der auf den Teigstrang austretenden Lichtstrahlen 5 besetzt. Die jeweilige Eindringtiefe der Teigstrang-Endabschnitte in die beiderseitigen Lichtgitter 3 lässt sich anhand der von den Spiegeln 12 reflektierten Lichtmenge über die entsprechenden Lichtsensoren im jeweiligen Gehäuseverbund 7 vom Steuerungsrechner abfragen und mit den beiderseitigen Distanzwerten d (die nicht gleich zu sein brauchen) sowie dem Durchmesser oder dem Radius des Richtrades 8 rechnerisch verknüpfen, um zur Teigstrang-Länge zu gelangen. Dabei ist der halbe Kreisumfang des Richtrades 8 über die an sich bekannte Kreisumfangsformel u = πT · D (D:Durchmesser) zu verwenden.

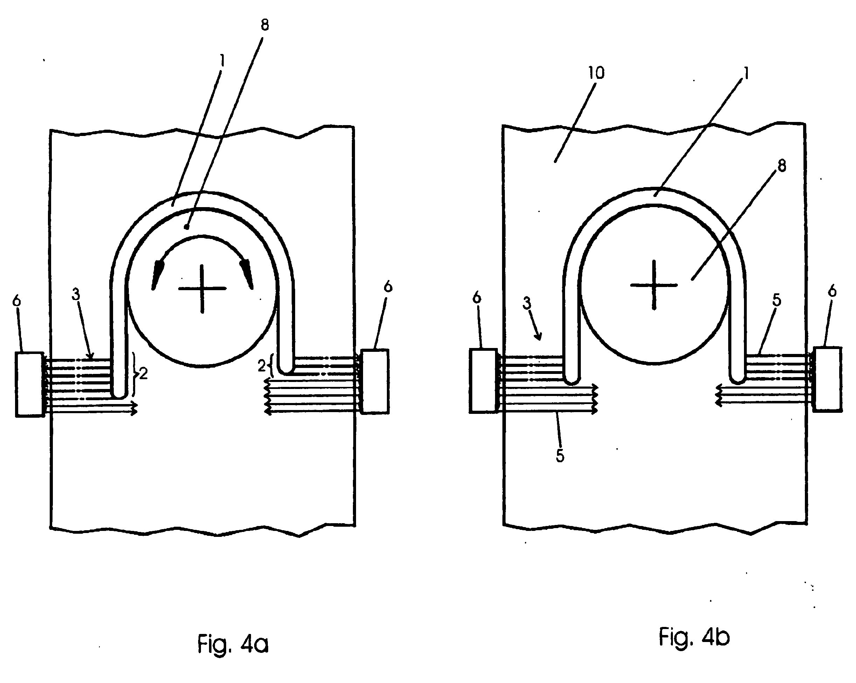

Das Ausführungsbeispiel gemäß Fig. 4a und 4b unterscheidet sich von dem nach Fig. 3a und 3b durch den Einsatz von Lichttastern 6 anstelle der Reflex-Lichtschranken 11 auf je einer Seite des Förderbandes 10. Die Austrittsintensität für die Lichtschranken 5 ist bei den an gegenüberliegenden Seiten des Förderbandes 10 angeordneten Lichttastern 6 so bemessen, dass eine Kollision oder Störung der in Förderrichtung 9 jeweils auf gleicher Höhe oder in gemeinsamer Flucht quer zur Förderrichtung 9 austretenden Lichtstrahlen 5 nicht auftritt oder vernachlässigbar ist. Wegen der Ermittlung der Eindringtiefen der beiden Endabschnitte 2 des U-förmigen Teigstrangs kann analog auf die Ausführungen zu Fig. 2 oder auch 3a,3b verwiesen werden. Zur symmetrischen Ausrichtung gemäß Fig. 4b wird über die Steuerung der Drehantrieb des Richtrades so lange betätigt, bis sich für jeden Teigstrang-Endabschnitt 2 etwa dieselbe, empfangene Lichtmenge im Lichttaster 6 feststellen lässt, welche von der jeweiligen Außenseite des Endabschnitts des U-förmigen Teigstrangs reflektiert wird. Die Teigstrang-Länge lässt sich analog zu den Ausführungen zu Fig. 3a und 3b ermitteln.

Für beide Ausführungen nach Fig. 3a, b und 4a, b ergibt sich die zur Erreichung der Symmetrie der Teigstrang-Enden 2 richtige Antriebsdrehrichtung für das Richtrad 8 aus dem etwaigen Ungleichgewicht der empfangenen bzw. reflektierten Lichtmengen zwischen beiden Teigstrang-Endabschnitten 2. Ist für den einen Endabschnitt 2 die empfangene Lichtmenge größer als die für den anderen Endabschnitt 2, ist von der Steuerung der Drehantrieb mit einer Drehrichtung anzusteuern, welche zur Verkürzung desjenigen Endabschnitts 2 führt, welcher die größere Lichtmenge reflektiert.

In der Stirnansicht gemäß Fig. 5 ist die Struktur eines Lichttasters 6 oder einer Reflex-Lichtschranke 11 gezeigt. Lichtsender S und Lichtempfänger E sind auf einer Höhe unmittelbar nebeneinander angeordnet. Die diskreten bzw. einzelnen Sender/Empfänger-Paare S,E, beispielsweise zehn, sind voneinander äquidistant mit der Entfernung e voneinander beabstandet. Die konstanten oder auch variierenden Entfernungen e können in einem Steuerungsrechner als Längeneinheiten beim Ausmessen des Teigstrangs 1 oder dessen Endabschnitte 2 interpretiert werden beziehungsweise hinterlegt sein.

### Bezugszeichenliste

- 1: Teigstrang
- 2: Endabschnitt
- 3: Lichtgitter
- A: Abstand
- 4: Einweg-Lichtschranken
- Si: Sender
- Ei: Empfänger
- 5: Lichtstrahl
- S: Sender
- E-: Empfänger
- 6: Lichttaster
- 7: Gehäuseverbund
- 8: Richtrad
- 9: Förderrichtung
- 10: Förderband
- 11: Reflex-Lichtschranken
- 12: Spiegelreflektor
- 13: Schrägwinkel
- d: Distanz
- e: Entfernung

## Patentansprüche

1. Verfahren zum Vermessen und/oder Ausrichten von Teigsträngen (1) in ihrer Länge und/oder Lage, zum Einsatz in Brezelschlingmashinen oder sonstigen Teigverarbeitungsmaschinen, mit folgenden Schritten:
a) über eine Teigstrang-Fördereinrichtung (10) wird ein Teigstrang (1) in Wirkungsverbindung mit einer Abtasteinrichtung gebracht,
b) die Ausgangssignale der Abtasteinrichtung werden von einer Steuerung, gegebenenfalls mit integrierter Regelung, aufgenommen und verarbeitet,
c) es wird über die Abtasteinrichtung ein Quantum an Energiefluss oder -strom vorbestimmt und auf den Teigstrang (1) emittiert,
d) es wird diejenige Energiemenge sensiert, erfasst oder ermittelt, welche an den Enden des Teigstrangs (1) vorbei fließt und/oder vom Teigstrang reflektiert und/oder absorbiert wird, und
e1) die vom Teigstrang reflektierte Energiemenge wird als Maß für die Länge oder einen Teil der Länge des Teigstrangs (1) verwendet und/oder ausgewertet, und/oder
e2) die reflektierte, absorbierte oder vorbei geflossene Energiemenge wird zum emittierten Energie-Quantum in ein Verhältnis gesetzt, das als Maß für die Länge und/oder Lage des Teigstrangs (1) verwendet und/oder ausgewertet wird.
**dadurch gekennzeichnet, dass**
f) der Teigstrang (1) über die Fördereinrichtung (10) mit einem motorisch verstellbären, radartigen Richtorgan (8) in Anschlag, Anlage oder Eingriff gebracht wird,
g) und das Richtorgan (8) von einer Steuerung kontrolliert und zur etwaigen Lageverschiebung des Teigstrangs entsprechend der vorbei geflossenen, reflektierten oder absorbierten Energiemenge und/oder dem Verhältnis von vorbei geflossener, reflektierter oder absorbierter Energiemenge zu emittiertem Energie-Quantum angesteuert wird,
h) und das Richtorgan (8) von einer Antriebseinheit drehbar ist, die von der Steuerung entsprechend der empfangenen Energiemenge und/oder dem genannten Verhältnis Energiemenge/Energiequantum kontrolliert wird,
i) und der Teigstrang (1) über die Fördereinrichtung (10) unter Erhalt oder Beibehaltung einer U-Form an das Richtorgan (8) zur Anlage gebracht wird,
k) anhand der empfangenen Energiemenge und/oder des genannten Verhältnisses Energiemenge/Energiequantum in der Steuerung ermittelt wird, ob die vom Richtorgan (8) in Förderrichtung abstehenden Teigstrang-Enden quer zur Förderrichtung (9) in einer gemeinsamen Flucht beziehungsweise auf gleicher Höhe liegen beziehungsweise ob der Teigstrang symmetrisch ausgerichtet ist,
I) und wenn nicht symmetrisch ausgerichtet, vor der Steuerung die Antriebseinheit zu ihrer Drehung sowie zur Lageverstellung und Ausrichtung des Teigstrangs (1) und zur Herbeiführung der gemeinsamen Flucht beziehungsweise der Symmetrie angesteuert wird, wobei
h1) die Lageverstellung und Ausrichtung des Teigstrangs solange erfolgt, bis die von jedem Teigstrang-Endabschnitt (2) empfangenen Energiemengen und/oder ermittelten genannten Verhältnisse Energiemenge/Energiequantum gleich sind,
h2) und/oder auf jeden in Förderrichtung (9) abstehenden Teigstrang-Endabschnitt (2) mehrere Energiequellen (S) gerichtet werden, und das Richtorgan (8) mit dem anliegenden Teigstrang (1), wenn zu seiner symmetrischen Ausrichtung notwendig, solange gedreht wird, bis die Teigstrang-Endabschnitte (2) die Energiequellen (S) gleichmäßig abdecken.

2. Verfahren nach Anspruch 1, **dadurch gekennzeichnet, dass** der Teigstrang mit einem mittleren Abschnitt über die Fördereinrichtung an das Richtorgan (8) zur Anlage gebracht wird.

3. Verfahren nach Anspruch 1 oder 2, **dadurch gekennzeichnet, dass** die beiden Teigstrang-Endabschnitte (2) mit jeweils dem gleichen Quantum an Energiefluss beaufschlagt werden.

4. Verfahren nach einem der vorangehenden Ansprüche, **dadurch gekennzeichnet, dass** der Energiefluss mit einer Mehrzahl diskreter, paralleler, in einem Verband angeordneter und/oder aneinander gereihter Energiequellen (S) erzeugt wird, die zu dem Bereich des Teigstranges hin ausgerichtet werden.

5. Verfahren nach Anspruch 3 und 4, **dadurch gekennzeichnet, dass** jedem Teigstrang-Endabschnitt (2) mehrere Energiequellen (S) in gleicher Anzahl zugeordnet werden.

6. Verfahren nach Anspruch 4 oder 5, **dadurch gekennzeichnet, dass** jeder Energiequelle (S) wenigstens ein diskreter oder einzelner Sensor oder E-nergieempfänger (E) zugeordnet werden.

7. Verfahren nach einem der vorangehenden Ansprüche, **dadurch gekennzeichnet, dass** aus der genannten Energiemenge oder dem genannten Verhältnis Energiemenge/Energiequantum in Verbindung mit einer oder mehreren geometrischen Abmessungen oder der sonstigen geometrischen Struktur des Anschlags oder Richtorgans (8) in der Steuerung die Teigstranglänge berechnet, und entsprechende Daten in einer Ausgabeschnittstelle zur Verfügung gestellt werden.

8. Verfahren nach einem der vorangehenden Ansprüche, **dadurch gekennzeichnet, dass** Daten, die der genannten Energiemenge und/oder dem genannten Verhältnis Energiequantum/Energiemenge oder einer daraus ermittelten Teigstranglänge entsprechen, einer oder mehreren vor- oder nachgeordneten Teigverarbeitungsstationen zugeleitet werden, beispielsweise einer vorgeordneten Teig-Wirkstation und/oder einer nachgeordneten Teigstrang-Schlingstation insbesondere mit Teigstrang-Dehnmitteln.

9. Verfahren nach einem der vorangehenden Ansprüche, **dadurch gekennzeichnet, dass** der Teigstrang (1) nach seinem Ausmessen und/oder Ausrichten zur Weiterbeförderung mit dem Anschlag oder Richtorgan (8) außer Eingriff gebracht wird.

10. Verfahren nach einem der vorangehenden Ansprüche, **dadurch gekennzeichnet, dass** zur Erzeugung des Energieflusses oder -stroms Schallenergie, elektrostatische Energie und/oder elektromagnetische Wellenenergie, insbesondere Licht, verwendet werden.

11. Verfahren nach einem der vorangehenden Ansprüche, **dadurch gekennzeichnet, dass** die vom Teigstrang reflektierte und/oder absorbierte Energiemenge und/oder die in der Steuerung empfangene Energiemenge in Bezug auf das auf den Teigstrang emittierte Energiequantum gesetzt wird.

12. Vorrichtung zum Ausrichten und/oder Vermessen von Teigsträngen (1), geeignet zur Verwendung beispielsweise in Brezelschlingmaschinen sowie zur Durchführung des Verfahrens nach einem der vorangehenden Ansprüche mit einer Fördereinrichtung (10), auf dessen Oberfläche mit quer aufstehender Drehachse ein von einer Antriebseinheit drehbares Richtrad (8) so angeordnet und abhebbar ist, daß geförderte Teigstränge (1) daran unter Erhalt oder Beibehaltung einer U-Form in Anlage kommen und mit Abheben des Richtrades (8) zur Weiterbeförderung freigegeben sind, und mit einer Abtasteinrichtung zur separaten Erkennung je eines beider, in Förderrichtung (9) abstehender Teigstrang-Endabschnitte (2), und mit einer die Antriebseinheit des Richtrades (8) kontrollierenden Steuerung, die zur Antriebskontrolle eingangsseitig mit der Abtasteinrichtung verbunden ist, **dadurch gekennzeichnet, dass** die Abtasteinrichtung für jeden Teigstrang-Endabschnitt (2) einen darauf ausgerichteten Verband oder Verbund (7) oder eine Reihe jeweils mit mehreren parallelen Energiequellen (S) und Energiesensoren oder -empfängern (E) aufweist, und die so gruppierten, mehreren Energiequellen (S) und/oder -sensoren oder -empfänger (E) beidseits des Teigstrang-Durchgangs in vorbestimmter Anzahl und/oder zur Emission eines vorbestimmten Energiequantums angeordnet und ausgebildet sind, und die Steuerung schaltungs- und/oder programmtechnisch dazu ausgebildet und eingerichtet ist, ein von einer Gruppe Energiequellen (S) auf den jeweiligen Teigstrang-Endabschnitt (2) emittiertes Energiequantum in ein Verhältnis zur daraus sensierten oder empfangenen Energiemenge zu setzen, und aus dem Verhältnis die Länge und/oder Lage des Teigstrangs abzuleiten und die Antriebseinheit zur Einhaltung einer vorbestimmten Teigstrang-Lage anzusteuern, wobei
- die Lageverstellung und Ausrichtung des Teigstrangs solange erfolgt, bis die von jedem Teigstrang-Endabschnitt (2) empfangenen Energiemengen und/oder ermittelten genannten Verhältnisse Energiemenge/Energiequantum gleich sind,
- und/oder auf jeden in Förderrichtung (9) abstehenden Teigstrang-Endabschnitt (2) mehrere Energiequellen (S) gerichtet werden, und das Richtrad (8) mit dem anliegenden Teigstrang (1), wenn zu seiner symmetrischen Ausrichtung notwendig, solange gedreht wird, bis die Teigstrang-Endabschnitte (2) die Energiequellen (S) gleichmäßig abdecken.

13. Vorrichtung nach Anspruch 12, **dadurch gekennzeichnet, dass** die Auswertung in Bezug auf das auf den Teigstrang (1) emittierte Energiequantum erfolgt.

14. Vorrichtung nach Anspruch 12 oder 13 **dadurch gekennzeichnet, dass** die Verbände, Verbunde (7), Reihen oder sonstige Gruppen mit Energiesendem (S) und -empfängern (E) als Lichtgitter (3) oder Lichtvorhänge jeweils mit einer Mehrzahl Lichtschranken (4,11), insbesondere Reflex- oder Einweglichtschranken, Lichttaster (6) oder optischer Näherungsschalter ausgebildet sind.

15. Vorrichtung nach Anspruch 14, **dadurch gekennzeichnet, dass** die Lichtschranken mit Lichtleitern in Glasfasertechnologie realisiert sind.

## Claims

1. A method for measuring and/or aligning the length and/or position of dough strands (1), for use in pretzel knotting machines or other dough processing machines, comprising the following steps:
a) a dough strand (1) is brought into operative connection with a scanning device by means of a dough strand conveyor (10),
b) the output signals of the scanning device are received and processed by a control, if necessary with integrated regulation,
c) a quantum of energy flow or flux is predetermined by the scanning device and emitted onto the dough strand (1),
d) the quantity of energy which flows past the ends of the dough strand (1) and/or is reflected and/or absorbed by the dough strand is sensed, detected or determined, and
e1) the quantity of energy reflected by the dough strand is used and/or evaluated as a measure for the length or a part of the length of the dough strand (1), and/or
e2) the quantity of energy reflected, absorbed or that has flowed past is set in a ratio to the quantum of energy emitted, said ratio being used and/or evaluated as a measure for the length and/or position of the dough strand (1),
**characterised in that**
f) the dough strand (1) is brought by means of the conveyor (10) to touch, make contact or engage with a motor-adjustable, wheel-type directional component (8),
g) and the directional component (8) is controlled by a control and is activated for possible position adjustment of the dough strand corresponding to the quantity of energy that has flowed past, been reflected or absorbed, and/or the ratio of the quantity of energy that has flowed past, been reflected or absorbed to the quantum of energy emitted,
h) and the directional component (8) can be rotated by a drive unit which is controlled by the control corresponding to the quantity of energy received and/or the aforementioned quantity of energy/energy quantum ratio,
i) and the dough strand (1) is brought by means of the conveyor (10) to rest on the directional component (8) gaining or maintaining a U-shape,
k) by means of the quantity of energy received and/or the aforementioned quantity of energy/quantum of energy ratio it is determined in the control whether the dough strand ends projecting from the directional component (8) in the direction of conveyance are aligned laterally to the direction of conveyance (9) in a common alignment or lying at the same height, or whether the dough strand is aligned symmetrically,
I) and if not aligned symmetrically, the drive unit is activated by the control to rotate it and adjust its position and align the dough strand (1) and to bring about the common alignment or symmetry,
h1) the position adjustment and alignment of the dough strand takes place until the quantities of energy received from each dough strand end section (2) and/or the aforementioned quantity of energy/quantum of energy ratios determined are equal,
h2) and/or a number of energy sources (S) are aligned to each dough strand end section (2) projecting in the direction of conveyance (9), and the directional component (8) with the adjacent dough strand (1), if so required for its symmetrical alignment, is rotated until the dough strand end sections (2) cover the energy sources (S) evenly.

2. The method according to Claim 1, **characterised in that** the dough strand is brought with a central section to rest against the directional component (8) by means of the conveyor.

3. The method according to Claim 1 or 2, **characterised in that** the two dough strand end sections (2) are subjected to the same quantum of energy flow respectively.

4. The method according to any of the preceding claims, **characterised in that** the flow of energy is generated with a plurality of discrete, parallel energy sources (S) arranged collectively and/or arranged adjacent to one another, which are aligned to the region of the dough strand.

5. The method according to Claims 3 and 4, **characterised in that** a number of energy sources (S), in the same number, are assigned to each dough strand end section (2).

6. The method according to Claim 4 or 5, **characterised in that** at least one discrete or single sensor or energy receiver (E) is assigned to each energy source (S).

7. The method according to any of the preceding claims, **characterised in that** the length of the dough strand is calculated from the aforementioned quantity of energy or the aforementioned quantity of energy/quantum of energy ratio in association with one or more geometric dimensions or the other geometric structure of the stop or directional component (8) in the control and corresponding data are made available in an output interface.

8. The method according to any of the preceding claims, **characterised in that** data which correspond to the aforementioned quantity of energy and/or the aforementioned quantum of energy/quantity of energy ratio or a dough strand length determined from this, are fed to one or more upstream or downstream dough processing stations, for example an upstream dough operating station and/or a downstream dough strand knotting station, in particular with dough strand stretching means.

9. The method according to any of the preceding claims, **characterised in that** after being measured and/or aligned the dough strand (1) is disengaged in order to be conveyed further with the stop or directional component (8).

10. The method according to any of the preceding claims, **characterised in that** sound energy, electrostatic energy and/or electromagnetic wave energy, in particular light, are used in order to generate the energy flow or flux.

11. The method according to any of the preceding claims, **characterised in that** the quantity of energy reflected and/or absorbed by the dough strand and/or the quantity of energy received in the control is set in relation to the quantum of energy emitted onto the dough strand.

12. An apparatus for aligning and/or measuring dough strands (1), suitable for use for example in pretzel knotting machines and for implementing the method according to any of the preceding Claims, comprising a conveyor (10) on the surface of which, with a laterally standing axis of rotation, a directional wheel (8) rotatable by a drive unit is arranged and can be raised such that dough strands (1) being conveyed come to rest against the latter, gaining or maintaining a U-shape, and are released for further conveyance by raising the directional wheel (8), and is connected to a scanning device for separate recognition of a respective one of the two dough strand end sections (2) projecting in the direction of conveyance (9) and to a control controlling the drive unit of the directional wheel (8) which is connected to the scanning device for drive control on the input side, **characterised in that** the scanning device has for each dough strand end section (2) an assembly or combination (7) aligned to the latter or a series respectively with a number of parallel energy sources (S) and energy sensors or receivers (E), and the plurality of energy sources (S) and/or sensors or receivers (E) grouped in this way are arranged and formed to both sides of the dough strand passageway in a predetermined number and/or for the emission of a predetermined quantum of energy, and the control is formed and set up electrically and/or programmatically in order to set a quantum of energy emitted by a group of energy sources (S) to the respective dough strand end section (2) in a ratio to the quantity of energy sensed or received from the latter, and to derive from the ratio the length and/or position of the dough strand and to actuate the drive unit to maintain a predetermined dough strand position,
- the position adjustment and alignment of the dough strand taking place until the quantities of energy received from each dough strand end section (2) and/or the aforementioned quantity of energy/quantum of energy ratios determined are equal,
- and/or a number of energy sources (S) being aligned to each dough strand end section (2) projecting in the direction of conveyance (9), and the direction wheel (8) with the adjacent dough strand (1), if necessary for its symmetrical alignment, being rotated until the dough strand end sections (2) cover the energy sources (S) evenly.

13. The apparatus according to Claim 12, **characterised in that** the evaluation takes place in relation to the quantum of energy emitted onto the dough strand (1).

14. The apparatus according to Claim 12 or 13, **characterised in that** the assemblies, combinations (7), series or other groups with energy transmitters (S) and receivers (E) are in the form of light grids (3) or light curtains respectively having a plurality of light barriers (4, 11), in particular reflex or one-way light barriers, light sensors (6) or optical proximity switches.

15. The apparatus according to Claim 14, **characterised in that** the light barriers with fibre optics are produced with glass fibre technology.

## Revendications

1. Procédé pour mesurer et/ou orienter des boudins de pâte (1) en longueur et/ou en position, pour usage dans des machines d'enroulement de bretzels ou d'autres machines de transformation de pâte, comprenant les étapes suivantes :
a) un boudin de pâte (1) est amené en coopération avec un dispositif de balayage par le biais d'un dispositif de transport (10) de boudin de pâte,
b) les signaux de sortie du dispositif de balayage sont enregistrés et traités par une commande, éventuellement avec une régulation intégrée,
c) un quantum de flux ou de courant d'énergie est prédéterminé via le dispositif de balayage et émis sur le boudin de pâte (1),
d) on capte, on saisit ou l'on détermine la quantité d'énergie qui s'écoule devant les extrémités du boudin de pâte (1) et/ou qui est réfléchie et/ou absorbée par le boudin de pâte, et
e1) la quantité d'énergie réfléchie par le boudin de pâte est utilisée et/ou exploitée comme mesure pour la longueur ou une partie de la longueur du boudin de pâte (1), et/ou
e2) la quantité d'énergie réfléchie, absorbée ou passante est fixée par rapport au quantum d'énergie émis dans un rapport qui est utilisé et/ou exploité comme mesure pour la longueur et/ou la position du boudin de pâte (1).
**caractérisé en ce que**
f) le boudin de pâte (1) est amené en butée, en appui ou en prise via le dispositif de transport (10) avec un organe directeur (8) du type à roue réglable par un moteur,
g) et l'organe directeur (8) est contrôlé par une commande et commandé pour l'éventuel réglage de position du boudin de pâte en fonction de la quantité d'énergie passante, réfléchie ou absorbée et/ou du rapport de quantité d'énergie passante, réfléchie ou absorbée au quantum d'énergie émis,
h) et l'organe directeur (8) peut être soumis à une rotation par une unité d'entraînement, qui est contrôlée par la commande en fonction de la quantité d'énergie reçue et/ou du rapport cité de la quantité d'énergie au quantum d'énergie,
i) et le boudin de pâte (1) est amené en appui sur l'organe directeur (8) via le dispositif de transport (10) en adoptant ou en conservant une forme de U,
k) à l'aide de la quantité d'énergie reçue et/ou du rapport cité de la quantité d'énergie au quantum d'énergie, il est établi dans la commande si les extrémités du boudin de pâte s'écartant de l'organe directeur (8) dans le sens de transport se situent transversalement à la direction de transport (9) dans un alignement commun ou à une même hauteur ou si le boudin de pâte est orienté symétriquement,
l) et s'il n'est pas orienté symétriquement, avant la commande, l'unité d'entraînement est commandée pour sa rotation, ainsi que pour le réglage de position et l'orientation du boudin de pâte (1) et pour assurer l'orientation commune ou la symétrie, dans lequel
h1) le réglage de position et l'orientation du boudin de pâte s'effectuent jusqu'à ce que les quantités d'énergie reçues par chaque section d'extrémité (2) du boudin de pâte et/ou les rapports cités établis de la quantité d'énergie au quantum d'énergie soient identiques,
h2) et/ou plusieurs sources d'énergie (S) sont dirigées sur chaque section d'extrémité (2) du boudin de pâte s'écartant dans le sens de transport (9) et l'organe directeur (8) est tourné avec le boudin de pâte (1) attenant, lorsque cela est nécessaire pour son orientation symétrique, jusqu'à ce que les sections d'extrémité (2) du boudin de pâte couvrent de manière égale les sources d'énergie (S).

2. Procédé selon la revendication 1, **caractérisé en ce que** le boudin de pâte est amené en appui avec une section centrale via le dispositif de transport sur l'organe directeur (8).

3. Procédé selon la revendication 1 ou 2, **caractérisé en ce que** les deux sections d'extrémité (2) du boudin de pâte sont alimentées avec le même quantum respectif de flux d'énergie.

4. Procédé selon l'une quelconque des revendications précédentes, **caractérisé en ce que** le flux d'énergie est généré avec une pluralité de sources d'énergie (S) discrètes, parallèles, aménagées en ensemble et/ou successives, qui sont orientées vers la zone du boudin de pâte.

5. Procédé selon la revendication 3 ou 4, **caractérisé en ce que** plusieurs sources d'énergie (S) sont affectées en nombre identique à chaque section d'extrémité (2) du boudin de pâte.

6. Procédé selon la revendication 4 ou 5, **caractérisé en ce qu'**au moins un capteur ou un récepteur d'énergie (E) discret ou individuel est affecté à chaque source d'énergie (S).

7. Procédé selon l'une quelconque des revendications précédentes, **caractérisé en ce que** la longueur du boudin de pâte est calculée à partir de la quantité d'énergie citée ou du rapport cité de la quantité d'énergie au quantum d'énergie en relation avec une ou plusieurs grandeurs géométriques ou avec l'autre structure géométrique de la butée ou de l'organe directeur (8) dans la commande et **en ce que** des données correspondantes sont mises à disposition dans une interface de sortie.

8. Procédé selon l'une quelconque des revendications précédentes, **caractérisé en ce que** des données correspondant à la quantité d'énergie citée et/ou au rapport cité du quantum d'énergie à la quantité d'énergie ou à une longueur du boudin de pâte calculée à partir de ceux-ci, sont acheminées à un ou plusieurs postes de traitement de pâte montés en amont ou en aval, notamment à un poste de travail de pâte monté en amont et/ou à un poste d'enroulement de pâte monté en aval, en particulier avec des moyens d'allongement du boudin de pâte.

9. Procédé selon l'une quelconque des revendications précédentes, **caractérisé en ce que** le boudin de pâte (1) est amené hors prise avec la butée ou l'organe directeur (8) après son mesurage et/ou son orientation pour le prolongement du transport.

10. Procédé selon l'une quelconque des revendications précédentes, **caractérisé en ce que**, pour générer le flux ou le courant d'énergie, on utilise de l'énergie acoustique, de l'énergie électrostatique et/ou de l'énergie à ondes électromagnétiques, en particulier de la lumière.

11. Procédé selon l'une quelconque des revendications précédentes, **caractérisé en ce que** la quantité d'énergie réfléchie et/ou absorbée par le boudin de pâte et/ou la quantité d'énergie reçue dans la commande est ou sont fixées par rapport au quantum d'énergie émis sur le boudin de pâte.

12. Dispositif pour orienter et/ou mesurer des boudins de pâte (1), convenant à l'utilisation notamment dans des machines d'enroulement pour bretzels, ainsi que pour la réalisation du procédé selon l'une quelconque des revendications précédentes, comprenant un dispositif de transport (10), à la surface duquel une roue directrice (8) pouvant tourner par une unité d'entraînement est agencée avec un axe de rotation se dressant transversalement et peut être retirée de sorte que les boudins de pâte (1) transportés y viennent en appui tout en obtenant ou en conservant une forme de U et sont libérés avec le retrait de la roue directrice (8) pour le transport suivant, et un dispositif de balayage pour l'identification séparée de chacune des deux sections d'extrémité (2) du boudin de pâte s'écartant dans le sens de transport (9) et une commande contrôlant l'unité d'entraînement de la roue directrice (8), qui est reliée pour le contrôle d'entraînement, côté entrée au dispositif de balayage, **caractérisé en ce que** le dispositif de balayage présente, pour chaque section d'extrémité (2) du boudin de pâte, un ensemble ou un composite (7) orienté sur celui-ci ou une série dotée respectivement de plusieurs sources d'énergie (S) et capteurs ou récepteurs d'énergie (E) parallèles, **en ce que** les multiples sources d'énergie (S) et/ou capteurs ou récepteurs d'énergie (E) groupés de la sorte sont agencées et formées de part et d'autre du passage du boudin de pâte en nombre prédéterminé et/ou pour l'émission d'un quantum d'énergie prédéterminé et **en ce que** la commande est réalisée et organisée par des techniques de commutation et/ou de programmation pour fixer un quantum d'énergie émis par un groupe de sources d'énergie (S) sur la section d'extrémité (2) respective du boudin de pâte dans un rapport à la quantité d'énergie qui y est captée ou qui y est reçue et pour déduire du rapport la longueur et/ou la position du boudin de pâte et pour commander l'unité d'entraînement pour le respect d'une position prédéterminée du boudin de pâte, dans lequel
- le réglage de position et l'orientation du boudin de pâte s'effectuent jusqu'à ce que les quantités d'énergie reçues par chaque section d'extrémité (2) du boudin de pâte et/ou les rapports cités établis de la quantité d'énergie au quantum d'énergie soient identiques,
- et/ou plusieurs sources d'énergie (S) sont dirigées sur chaque section d'extrémité (2) du boudin de pâte s'écartant dans le sens de transport (9) et la roue directrice (8) est soumise à une rotation avec le boudin de pâte (1) attenant, lorsque cela est nécessaire pour son orientation symétrique, jusqu'à ce que les sections d'extrémité (2) du boudin de pâte couvrent de manière égale les sources d'énergie (S).

13. Dispositif selon la revendication 12, **caractérisé en ce que** l'exploitation s'effectue par rapport au quantum d'énergie émis sur le boudin de pâte (1).

14. Dispositif selon la revendication 12 ou 13, **caractérisé en ce que** les ensembles, les composites (7), les rangées ou d'autres groupes avec des émetteurs d'énergie (S) et des récepteurs d'énergie (E) se présentent sous la forme de grilles lumineuses (3) ou de rideaux lumineux pourvus respectivement d'une pluralité de barrières lumineuses (4,11), en particulier de barrières lumineuses à reflet ou unidirectionnelles, de détecteurs à spot mobile (6) ou de détecteurs de proximité optiques.

15. Dispositif selon la revendication 14, **caractérisé en ce que** les barrières lumineuses sont réalisées avec des conducteurs optiques en technologie de fibres de verre.
